# EUROPEAN PATENT SPECIFICATION

(11) **EP 2 006 826 B1**
(45) Date of publication and mention of the grant of the patent: **12.01.2011**
(21) Application number: 08158350.2
(22) Date of filing: 16.06.2008
(51) Int. Cl.: G09F 21/04, G09F 9/30

(54) **Electronic display panels for automobiles**
Elektronische Anzeigetafeln für Kraftfahrzeuge
Panneaux d'affichage électroniques pour automobiles

(30) Priority: 21.06.2007 US 766395
(43) Date of publication of application: 24.12.2008
(73) Proprietor: CMP LLC, Beverly Hills, California 90211 (US)
(72) Inventor: Au, Kammy W, San Gabriel, CA 91775 (US); Hartsfield, Barry, San Gabriel, CA 91775 (US)
(74) Representative: Chapman, Helga Claire

(56) References cited:
- DE-A1- 3 844 575
- DE-A1- 19 517 742
- GB-A- 2 175 428
- US-A- 5 132 666
- US-A1- 2002 084 891

## Description

### BACKGROUND OF THE INVENTION

### Field of the Invention

The present invention relates to the area of presenting information for advertising or other purposes, and more specifically to a method and system for displaying information on top of a moving vehicle, at least some of the displayed information, at the time of being displayed, pertaining to the location of the moving vehicle.

### Description of the Related Art

Studies show that people notice words and pictures displayed on moving objects, such as trucks more than those on stationary billboards. That is why nearly all companies use their trucks to promote intended messages. For example, delivery trucks by United Parcel Service (UPS) are all in brown color and carry the company logo as well as service messages while moving trucks from U-haul are all in orange and white colors and imprinted with different sizes of available trucks and corresponding prices. The purpose of using trucks as moving billboards is to make a company stand out and get noticed in traffic areas. Similarly, advertisements or any commercial messages on moving vehicles create an eye level impact so as to increase awareness and overall positive impression for the advertiser (e.g., a company).

The moving advertisements on moving vehicles have proven to be as an effective advertising medium. Innovations in making such moving advertisements include vehicles (e.g., buses) entirely wrapped in electrostatic marking film carrying advertising messages. However, the moving advertisements on vehicles are stationary and sometimes permanent. It is generally difficult to change any messages or contents on the advertisements from time to time.

It is well known in the advertising industry that direct or relevant marketing is much more effective than the mass marketing, namely an advertisement pertaining to someone's interest or need would generate a response. For example, showing a pricy European-style furniture advertisement would make a lot of sense in a well established residential area than in a disadvantaged or crowded neighborhood.

Accordingly, there is a great need for solutions conveying information dynamically from a moving vehicle to viewers, wherein the information is conveyed based on a location of the moving vehicle and more related to viewers in the location and/or the time at which the information is seen.

GB 2175428 describes a signaling system for a vehicle with a display system for showing electronic messages.

DE 19517742 relates to controlling the charging and discharging of a double battery.

US 5132666 shows an electronic display connected to a power supply. The electronic display displays character and graphics information.

US 2002/084891 describes computer programs and systems for displaying information on vehicles.

### SUMMARY OF THE INVENTION

This section is for the purpose of summarizing some aspects of the present invention and to briefly introduce some preferred embodiments. Simplifications or omissions in this section as well as in the abstract and the title may be made to avoid obscuring the purpose of this section, the abstract and the title. Such simplifications or omissions are not intended to limit the scope of the present invention.

The invention is defined by the features of the claims and pertains to a display system mounted on top of a vehicle (e.g., a taxi). The display system includes a display unit configured to display messages provided locally or remotely, wherein the messages may be in form of static or moving graphics, texts, animation or video, and include a set of advertising messages and location-based messages. The display system includes a Global Positioning System (GPS) to detect the current position of the vehicle. In accordance with the location information, messages may be retrieved locally from a storage device or remotely from a base station via a wireless network. As a result, relevant messages or commercial advertisements can be displayed in the display unit.

According to one aspect of the present invention, the display unit includes at least two display panels and two display plates. The display panels are for displaying received or retrieved messages. In one embodiment, two display panels are mounted oppositely with the display side facing outwards such that the display panels may be readily seen when the vehicle goes around. In another embodiment, three display panels are positioned along the three sides of a triangle. When mounted on top of a vehicle, with one of three display panels facing the rear of the vehicle, all three display panels may be conveniently viewed by viewers in nearly all directions of the vehicle. Depending on implementation, the display panel in use may be of any commercially available display means, such as liquid crystal display (LCD), Plasma or light emitting diode (LED). The display plates are for displaying emergency messages when needed. In general, the display plates are smaller in size compared to that of the display panels. The display plates that normally display a default message may be triggered to display an emergency message. For cost consideration, the display plates are normally made based on LED.

According to another aspect of the present invention, the display unit is encased entirely in an enclosure that can be mounted on top of a vehicle (e.g., an automobile). The enclosure is configured to allow messages displayed on the display unit viewable all lateral directions: front, rear, and two sides. The display unit includes a pair of video image display panels (e.g., LCD or LED). The display panels are located in either side of the two sides of the display unit. A pair of display plates is located perpendicular to the pair of the display panels, one facing the front end and the other the rear end. Front and rear end cover of the enclosure are made of clear or transparent material such that messages on the display plates can be seen by the viewers. The top of the enclosure comprises a canopy also made of clear or transparent material. In order to reduce drags and noises caused by air flow, both the front and rear end covers and the canopy are configured with an aerodynamic shape (e.g., smooth curvature). The bottom of the enclosure comprises a contoured base so shaped to fit roof curvature of the vehicle. To ensure the weight of the display unit to be distributed substantially even on the vehicle root, a set of anchors are configured to adjustably secure the display unit onto ribs under the vehicle roof.

According to still another aspect of the present invention, the display system is configured to include a power management circuit board, which ensures the efficient usage of a primary and a secondary power sources (e.g., primary battery and secondary battery) of the display unit. The power management circuit board comprises various electronic controls to provide at least the following functions: 1) preserve the primary power source so that the engine of the vehicle can be restarted; 2) automatically switch to the secondary power source within a predetermined amount of time (e.g., 0-5 minutes) after the engine is turned off; 3) automatically turn off the display unit after a predetermined amount of time (e.g., 60 minutes); and 4) change illumination intensity of the display unit in response to ambient environment detected by a light sensor (e.g., a Cadmium Sulphide (CdS) photocell light sensor).

According to still another aspect, the enclosure is configured to include a number of cooling air duct openings such that the ambient air can flow through the interior of the enclosure to cool down interior of the enclosure (i.e., display panels and display plates). A number of air filters are placed behind the air ducts to reduce dust to be accumulated or built up within the enclosure. Also included inside the enclosure is a number of water diverter configured to divert any water (e.g., rain got through the air ducts) away from electronic parts (e.g., circuit board, LCD, LED) and to drain out through a set of drain holes.

The present invention may be implemented in different forms. According to one embodiment, the present invention is a display system for showing electronic messages, the display system comprises at least the following: a vehicle having at least a primary battery; a display unit, mounted on roof of the vehicle, configured for showing electronic messages that can be illuminated with variable intensity; and a power management device coupled to the at least one battery of the vehicle and the display unit, wherein the power management device is configured to determine an appropriate battery to energize the display unit. The system further comprises a light sensor coupled to the power management device, wherein the light sensor is configured to detect an ambient light condition, responding to which the illumination intensity of the electronic messages varies; a computer device configured for processing and controlling the electronic messages to be shown in the display unit; and a Global Position System (GPS) configured to determine a location of the vehicle, wherein the computing device, coupled to the GPS, communicates wirelessly with a base station to receive at least some of the electronic messages in accordance with the location of the vehicle.

One of the objects, features, advantages, benefits of the present invention is to provide a solution for conveying media information to viewers, the solution employs a vehicle mounted with a display system. When the vehicle goes around in traffic areas, relevant information displayed in the display system may be readily seen by viewers.

Other objects, features, advantages, benefits of the invention will become more apparent from the following detailed description of a preferred embodiment, which proceeds with reference to the accompanying drawings

### BRIEF DESCRIPTION OF THE DRAWINGS

The present invention will be readily understood by the following detailed description in conjunction with the accompanying drawings, wherein like reference numerals designate like structural elements, and in which:

FIG. 1A is a perspective view showing an exemplary display unit suitable for being mounted on top of a moving vehicle such as a taxi, the display unit includes two display panels and two display plates in accordance with one embodiment of the present invention;

FIG. 1B is a perspective view showing another exemplary display unit according to another embodiment of the present invention;

FIG. 1C shows a side elevation view of the display unit of FIG. 1B;

FIG. 1D shows a front end elevation view of the display unit of FIG. 1B;

FIG. 2A shows a functional block diagram of a control system in the display system;

FIG. 2B shows an example of processing a media content in a media processor;

FIG. 2C shows that information to be displayed may be retrieved locally or remotely;

FIG. 2D shows a control of two display plates that in a normal condition are emulated with a switch in "off" position to show a default message;

FIG. 3 shows a flowchart or process of displaying media information to viewers via a display system mounted on top of a vehicle; and

FIG. 4 is a circuit diagram of an exemplary power management circuit board of either display unit of FIG. 1A or FIG. 1B, in accordance with one embodiment of the present invention.

### DETAILED DESCRIPTION OF THE INVENTION

The invention pertains to a display system mounted on top of a vehicle (e.g., a taxi). The display system includes a display unit configured to display messages provided locally or remotely, wherein the messages may be in form of static or moving graphics, texts, animation or video and include a set of advertising messages and location-based messages. The display system includes a Global Positioning System (GPS) to detect the current position of the vehicle. In accordance with the location information, messages may be retrieved locally from a storage device or remotely from a base station via a wireless network. As a result, relevant messages or commercial advertisements can be displayed in the display unit.

The detailed description of the invention is presented largely in terms of procedures, steps, logic blocks, processing, and other symbolic representations that directly or indirectly resemble the operations of data processing devices coupled to networks. These process descriptions and representations are typically used by those skilled in the art to most effectively convey the substance of their work to others skilled in the art. Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments. Further, the order of blocks in process flowcharts or diagrams representing one or more embodiments of the invention do not inherently indicate any particular order nor imply any limitations in the invention.

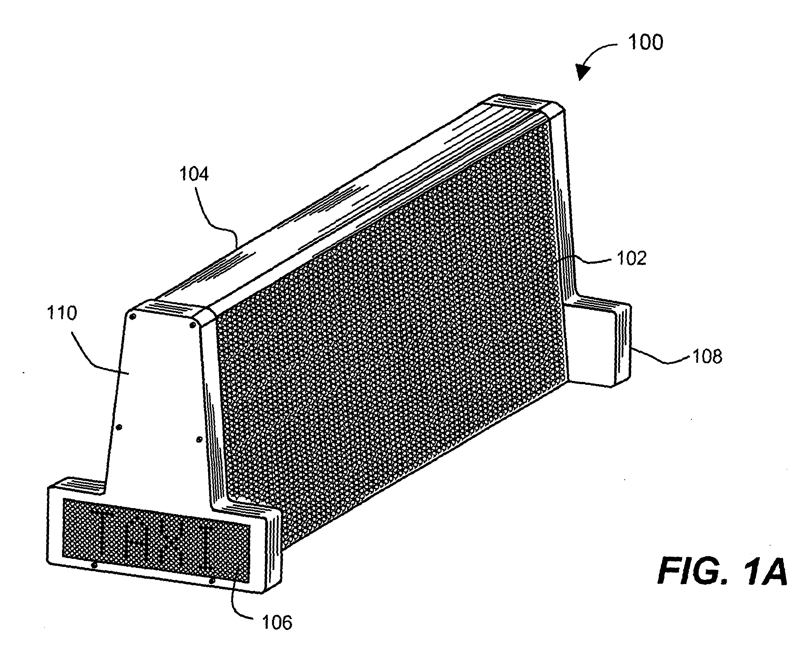

Referring now to the drawings, in which like numerals refer to like parts throughout the several views. FIG. 1A shows a display system **100** suitable for being mounted on top of a moving vehicle such as a taxi. The display system **100** includes two display panels **102** and **104** (not explicitly shown in the figure), and two display plates **106** and **108** (not explicitly shown in the figure). Preferably, the display panels **102** and **104** are identical. According to one embodiment, the display panel **102** or **104** is a commercially available display panel based upon, for example, LCD, LED, Plasma or other lighting sources. According to another embodiment, the display panel **102** or **104** includes a matrix of light emitting diodes (LED). The light emitting diodes in the matrix may be in at least three different colors (e.g., red, green and blue), surface mount diodes or tri-color diodes. To support weather proof, in one embodiment, each of the diodes is positioned and sealed on a silicon base and/or UV protected. Additionally, the display panels and/or display plates may be protected by a tinted or clear polycarbonate screen for protection from harmful UV rays and damages from vandalism or accident.

The two display panels **102** and **104** are provided to display media information that may include, but may not be limited to, images, graphics, animations, video and texts. The media information may be provided locally or remotely. As will be further described below, locally provided media information is typically from a storage device integrated or enclosed in the display system **100** while remotely provided multimedia information is provided wirelessly from a base station.

The two display plates **106** and **108** are configured to display fixed messages such as "Taxi" or "Help". In a normal condition, a word "Taxi" or the like may be displayed. In an emergency situation in which, for example, a driver needs help, a switch in the vehicle may be activated to cause an eye-catching message (e.g., "Help") to be displayed. In one embodiment, each of the two display plates **106** and **108** includes an array a matrix of light emitting diodes in at least one color. In a normal condition, the two display plates **106** and **108** are coupled to a fare meter and, when a taxi operates, are turned on to display a word or phrase in one color (e.g., green or yellow) to indicate that the taxi is for hire. In an emergency situation, a word or phrase is shown, perhaps in another color (e.g., red or amber), and/ or flashed panically or periodically. As will be described below, the word or phrase in the emergency situation may be supplied by a base station via a network for applications of an amber alert.

In one embodiment, spaces such as those above the display plates, referenced by **110** as an example, may be used for displaying static messages. Thus the display system **100** essentially provides means to display both media information that may be dynamic or static as well as to display pure static information in the traditional billboard style.

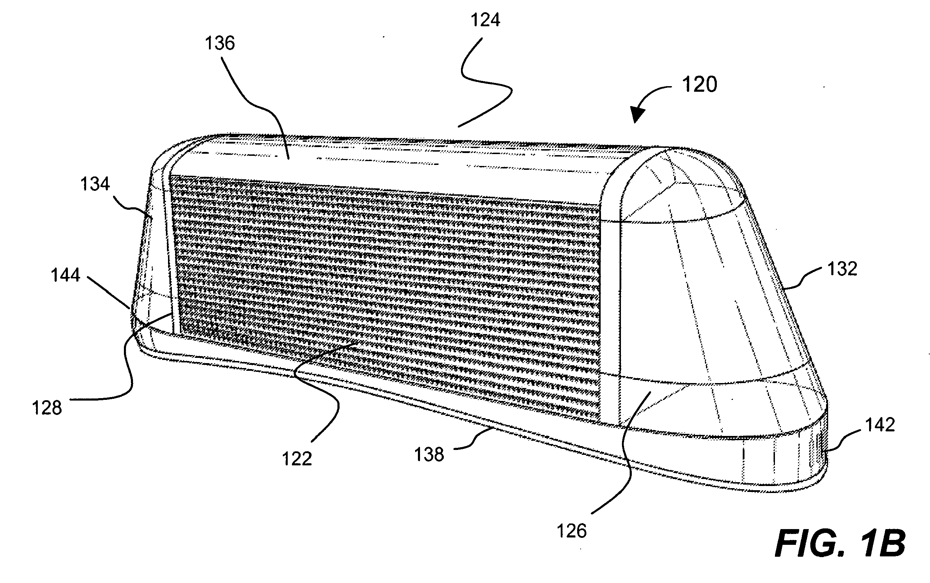

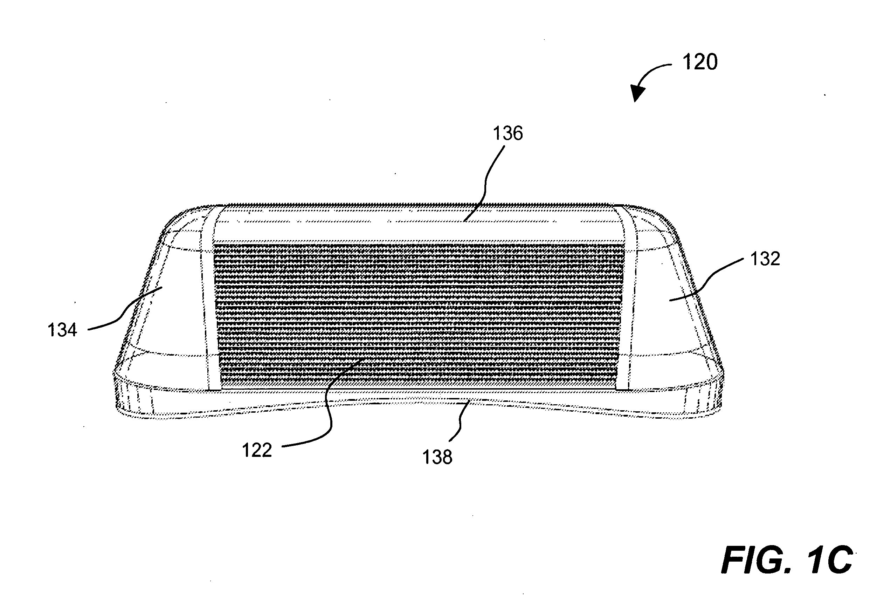

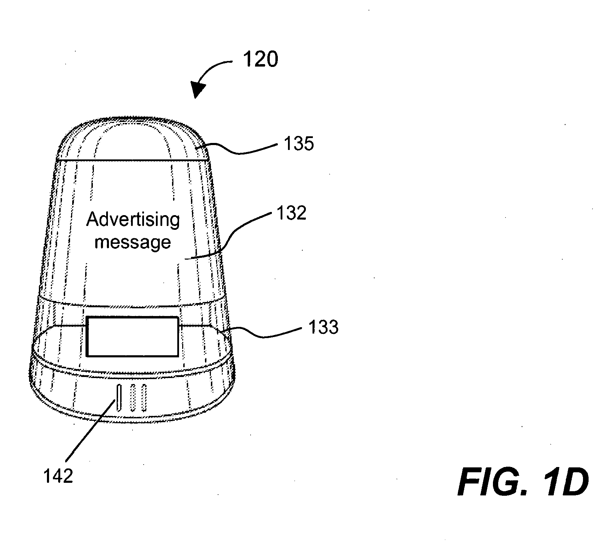

In another embodiment, a perspective view of another exemplary display unit **120** is shown in FIG. 1B. A side and a front end elevation view of the display unit **120** are shown in FIG. 1C and FIG. 1D, respectively. Due to the symmetry in both directions, the view from other side is a mirror image of FIG. 1C and a rear end elevation view is a mirror image of FIG. 1D. In particular, FIG. 1D shows that a LED panel is housed in a chamber with a transparent cover. The LED panel displays, for example, "HELP" if the driver/passenger needs help or in emergency, or "TAXI" if the taxicab is available for hire. The display unit **120** comprises two display panels **122** and **124,** and two display plates **126** and **128** similar to the embodiment of FIG. 1A. The display panel **124** and the display plate 128 are not explicitly shown due to the viewing angle in FIG. 1B and FIG. 1C.

In one embodiment, the display unit **120** is encased in an enclosure made of clear or transparent material (e.g., acrylic glass) such that messages (static or dynamic) displayed on the display unit **120** can be seen through by viewers. In particular, the top cover or canopy **136** of the enclosure has a semicircular cylindrical shape. Further, the top cover or canopy **136** is shaped to substantially reduce the drags and noises when the vehicle is in motion. Front end cover **132** and rear end cover **134** of the enclosure are similar. Each comprises a lower portion having a cut-off semi-conical shape and a top portion with a shape of rounded corner. Smooth aerodynamic curvature of the front end **132** and rear end covers **134,** and the canopy **136** is configured to reduce drags and noises caused by air flows due to speed of a traveling vehicle, on which the display unit is mounted.

In one embodiment, as shown in FIG. 1D, the front end **132** and rear end covers **134** is shown to have three parts, the bottom part **133** forms a chamber with a transparent cover. A display plate is positioned in the chamber and may be configured to display a default message "TAXI" when the vehicle is in service. The display plate may display "HIRE" when the vehicle is for hire. The display plate may display some other type of messages, for example, "HELP" when occupants in the vehicle need help. The middle part is used to display static messages. The top part **135** also forms a chamber. Depending on implementation, the top part **135** may be used to display an indicator or house another display plate.

The bottom **138** of the display unit **120** is so shaped to fit roof curvature of a vehicle, on which the display unit is mounted. The bottom curvature may be custom made to fit different vehicle models. For example, due to popularity of using Ford Crown Victoria as taxicabs, the default bottom **138** may be configured to fit the roof shape of a Crown Victoria. The custom made bottom **138** not only provides better fit as good appearance, but also reduces wind drags and noises as the vehicle travels. In addition, a better bottom fit allows a pair of adjustable anchors, located inside the bottom **138** portion of the enclosure, to be securely locked onto ribs under the roof of the vehicle such that the weight of the display unit **120** can be distributed substantially even over the roof of the vehicle.

In order to provide ventilation of the enclosure for the display unit **120,** a number of cooling air ducts **142** and **144** are included, for example, the front end cover **132** and the rear end cover **134,** respectively. The cooling air duct openings **142** and **144** are configured to allow relatively cooler ambient air to flow through the interior of the enclosure and the display unit **120** to reduce the heat generated by the display panels **122** and **124,** and/or by the display plates **126** and **128.** To prevent dust from dirty airs to be accumulated inside the enclosure, a number of air filters are placed behind the cooling air duct openings **142** and **144** to filter out the dust. Also included in the display unit **120** is a set of water diverters and drain holes, which are configured to divert any water (e.g., rain) getting through the air duct openings **142** and **144.**

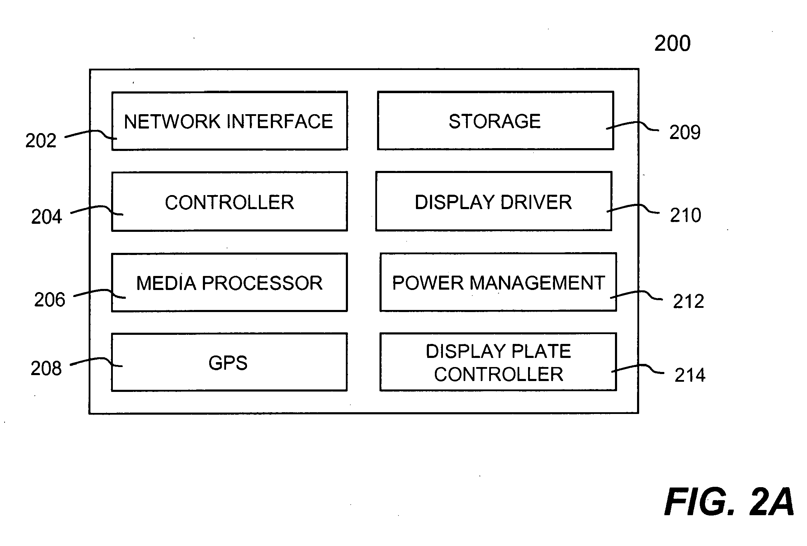

Referring to FIG. 2A, there shows a functional block diagram **200** of a control system or computing device in the display system **100** of FIG. 1A. According to one embodiment, the control system includes a network interface **202,** a controller **204,** a media processor **206,** a global positioning system (GPS) **208,** a storage device **209,** a display driver **210,** a power management device **212,** and a display plate controller **214.** It should be noted that not all of these components must be employed in order to practice the present invention.

The network interface **202** facilitates data exchange between the system **100** and a base station. In one embodiment, the network interface **202** operates to facilitate the system **100** of FIG. 1A to exchange data over a wireless network. In one example, the network interface **202** operates in accordance with a commonly used protocol such as UDP, TCP/IP or a cellular protocol. The controller **204** controls operations of these and other components and causes the display driver **210** to output desired information in desired manners.

The media processor **206** may be part of the controller **204** and is configured to perform processing of media information. One of the features in the present invention is that the display system **100** of FIG. 1A displays all types of information including static or moving graphics, texts, animations as well as motion images. Because the physical sizes of the display panels such as those panels **102** and **104** in FIG. 1A can be in sizes different from the original sizes of the content intended to be displayed, if displayed without preprocessing, cropping or other undesired effects may be seen. In some case, a retrieved movie or message is in compressed format, the media processor **206** is configured to decompress the movie or message. The media processor **206** is provided to ensure that contents to be displayed are processed accordingly so as to display the information correctly on the display panels.

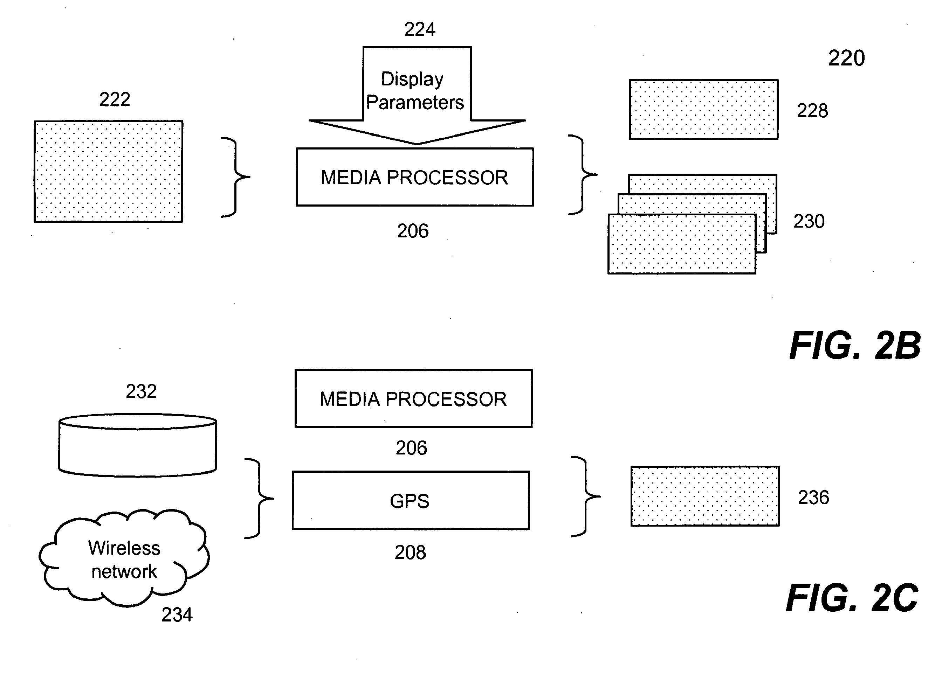

FIG. 2B shows that an original content **222** is in a first size and the processed content **228** is in a second size. The original content **222** may be provided locally or remotely. The media processor **206** is configured to process the original content **222** in accordance with display parameters **224** pertaining to the display panels or other desired artistic effects. The display parameters **224** include at least information about width and height of the display panels. Subsequently, processed content is produced in a format **228** or **230.** According to one embodiment, the format **228** is simply a standard display. Like a television or computer display monitor, the standard display means herein to display the original content in fidelity. Conversely, the format **230** is a format that includes some artistic effects in the original content. For example, the height of the original content is bigger than that of the display panel, the processed content in format **230** is now in several frames that can be shown sequentially or in a rolling manner. Another example of the format **230** may include special artistic effects in the processed content, where these special artistic effects may be very suitable for a type of display panel. In an amber application, a special message is received. The message can be processed to be displayed on a display panel in a manner that readily draws attention from viewers (e.g., pedestrians).

The GPS **208** is a device that, when operating in conjunction with the vehicle, detects the present location of the display system. When the display system is mounted on top of a taxi, the GPS **208** indicates the present location of the taxi. According to one embodiment, the GPS **208** outputs the location information that enables the display system **100** to display location-based information. An example of the location-based information is a special offering in a local department store. Together with a current time provided inherently in the display system **100,** the location-based information can be also time-sensitive. An example of the location-based information that is also time sensitive is an advertisement of a special offer valid from 11:00AM to 2:00PM from a local restaurant or a fast food chain store.

FIG. 2C shows that the location-based information that may be also time sensitive may be from a local storage device **232** or provided from a base station via a the display unit wireless network. In one embodiment, the storage device **232** in the display system **100** is loaded with a plurality of commercial advertisements, some of which are specifically requested to be displayed in a certain location during a certain time. When a taxi happens in the specified location detected by the GPS **208** and when the certain time arrives, such commercial advertisements are retrieved and may be processed by the media processor **206** for display on the display panels. When a taxi mounted with such display system is in a location other than the specified location, commercial advertisements pertaining to the location may be provided from a base station via the wireless network **234.** Regardless of the original source of the commercial advertisements, the GPS **208** and the media processor **206** (perhaps with other components) facilitate polling of relevant commercial advertisements and to display the advertisements properly on the display panels.

The storage device **209** is provided to store code or software modules for various applications in addition to providing a storage space for media information. One of the modules is to facilitate the operations of many of the components in the control unit **200** of FIG. 2A. Another one of the modules is to record time, duration or location when a particular piece of media information has been displayed. Still another one of the modules is a schedule that determines how, when and where a particular piece of media information needs to be displayed. In one application, the storage device **208** is scheduled to download media information from a base station along with a schedule. In another application, the storage device **208** is scheduled to receive certain media information from a base station when the vehicle is in a coverage area of the base station.

According to one embodiment, one of the modules is configured to perform conversations of media information received for display. When a received media advertisement is in MPEG2 that is good for LCD display panels but nevertheless not suitable for display on LED display panels, the module converts the media advertisement in MPEG2 to MPEG4 or other format suitable for display on the LED display panels.

The display driver **210** or the display plate controller **214** is a device that facilitates a proper display of any content on a corresponding display panel or plate. To distinguish the two types of functions of displays, the display **102** or **104** is referred to as a display panel while the display **106** or **108** is referred to as a display plate. Those skilled in the art would understand that it is not a limitation in the present invention that the two displays must be different. Both the displays **102** or **104** may be of the same type. In practice, according to one embodiment, the displays **106** and **108** are used for emergency messaging when needed, while the displays **102** and **104** are primarily used for conveying static or dynamic messaging to potential viewers (e.g., pedestrians).

A display system (e.g., 100 of FIG. 1A and **120** of FIG. 1B) operates on a power unit (e.g. battery) of the vehicle and may draw significant power from the power unit. The power management **212** is provided to ensure that the vehicle is not disabled from a drained power unit because of the display system. In one embodiment, the power management **212** is configured to regulate the use of the power by the display system to ensure that the display system operates with a least amount of power. In another embodiment, the power management **212** is configured to automatically turn off the display system in an event that the vehicle stops for an undesired lengthy period. In another embodiment, a back-up power unit is provided that is switched on to energize the display system when the vehicle stops for a predefined time to keep the vehicle power unit in good condition. When the vehicle starts to move again, the vehicle power unit is switched on to energize the display system and the back-up power unit gets charged.

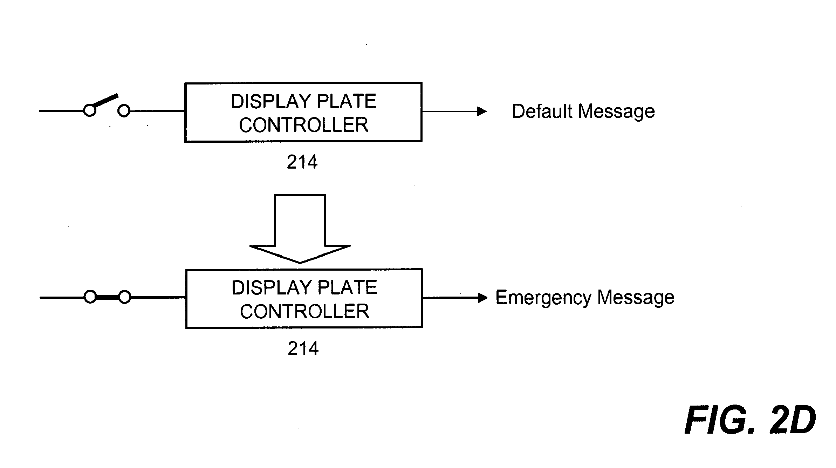

Referring now to FIG. 2D, there shows a control of the display plate **106** and **108**. The display plate **106** and **108** in a normal condition emulated with a switch **250** in "off" position show a default message. When a driver needs immediate help from others, the switch **250** is in "on" position, causing the display plate controller **214** to display an emergency message on the display plates. Preferably the emergency message is displayed in a manner that readily draws attention from others. According to one embodiment, the switch **250** may be located conveniently near the driver. When, for example, the driver is being attached or in need for help, the driver may activate the switch that causes the display plates to show an emergency message to draw attentions from viewers. In any case, it should be understood to those skilled in the art that either the default message or the emergency message may be dynamically changed to a situation or electronically determined by the control unit **200** of FIG. 2.

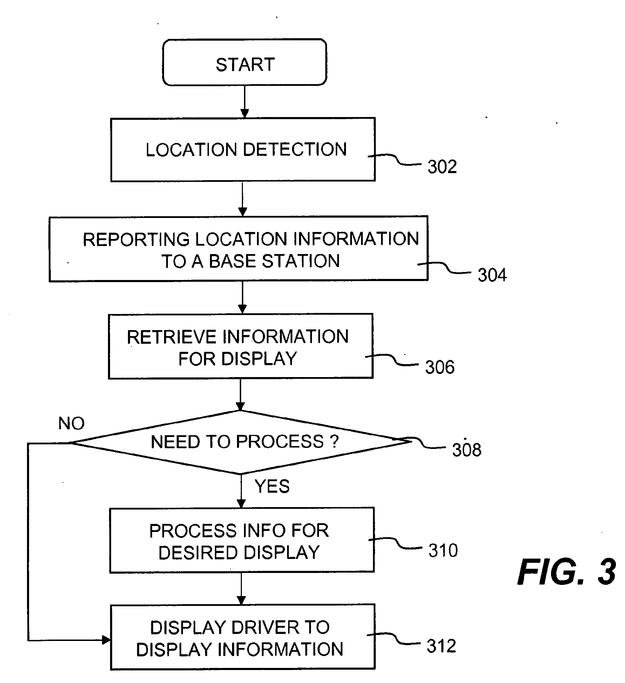

Referring now to FIG. 3, there shows a flowchart or process **300** of displaying media information to viewers via a display system mounted on top of a vehicle. The process **300** may be understood in conjunction with the previous figures and implemented as a method and a system to efficiently convey relevant information to viewers. At least some of the relevant information may be location-based and others may be time sensitive. The relevant information may come in a form of graphics, texts, animation or video.

As described above, a display system, such as that **100** of FIG. 1A, is preferably mounted on top of a car (e.g., a taxi). Accordingly, at **302,** the current location of the car is determined via a GPS. At **304,** the location information is transported to a base station via a wireless network (e.g., a cellular network). The base station may be operated by a service provider and provide various information to registered cars to display some of the information at relevant location at a predefined time. In one embodiment, the location information including longitude and altitude of the vehicle is transported to the base station in data format suitable for a commonly used communication protocol (e.g., UDP or TCP/IP).

At **306,** the display system receives media information either locally or remotely. As described above, some of the media information may be prestored or loaded at a certain time in a storage device integrated or enclosed in the display system and others can be lively fed or retrieved from a base station. In one embodiment, a request including the location and time information is generated, the request is sent to the storage device to determine whether any preloaded information shall be displayed. If there is one commercial message that needs to be displayed, the message is retrieved from the storage device. The request may also be sent to the base station that determines any relevant information with criteria met by the parameters in the request. If there is one message that shall be displayed on the display system of the vehicle in the particular location at the specified time, the message is then transported in response to the request to the display system.

Regardless where the message or media information is retrieved, at **308,** a decision is determined whether the retrieved media information needs to be processed. If there is no need to process the retrieved information, the process **300** goes to **312** that causes the display panels to display the retrieved information. If the retrieved information needs to be processed, the process **300** goes to **310,** where the retrieved information is processed in accordance with predefined requirements (e.g., resizing and rendering to add artistic effects). The processed information is then sent to the display panels for display at **312.**

Other functions, not shown in FIG. 3, may include recording time, duration and location of a particular message that has been displayed. Such information may facilitate a service provider to determine billing information for its clients.

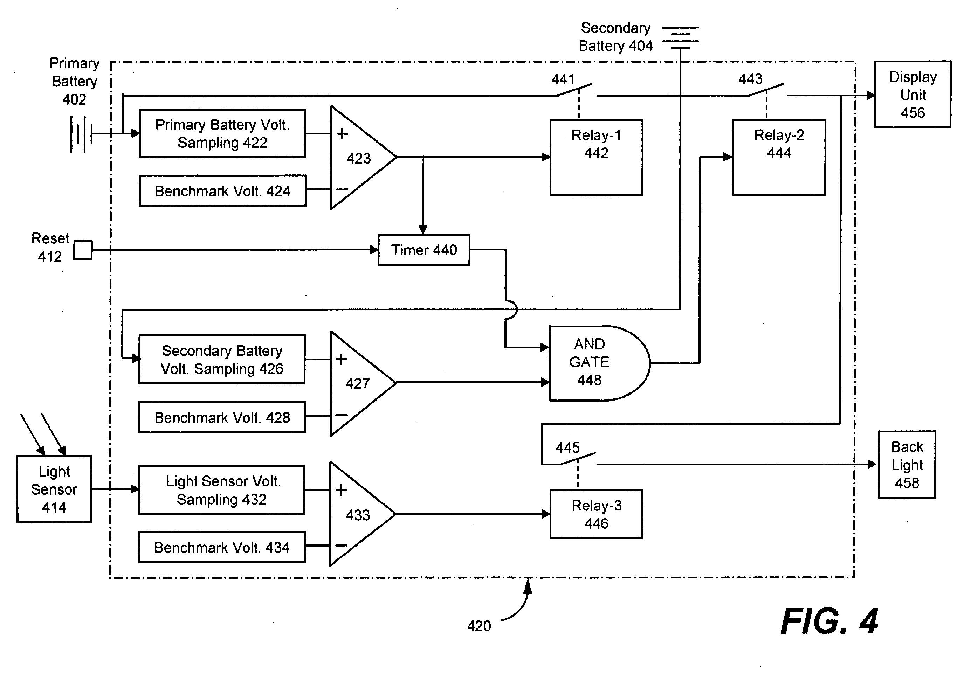

Referring to FIG. 4, there shows an exemplary circuit of a power management unit **420** configured to control the power supply to a display unit **456** (e.g., **100** of FIG. 1A or **120** of FIG. 1B). In one embodiment, a power source to energize the display unit **456** is provided by a battery of the vehicle. In another embodiment, there are two power sources: a primary battery **402** and a secondary battery **404.** The primary battery **402** is the main battery for the vehicle. The secondary battery **404** is a backup battery when the primary battery **402** needs to be preserved to start or restart the vehicle engine. The power management unit **420** is configured to select which one of the power sources to energize the display unit by detecting a state of the vehicle engine and states of the primary **402** and/or secondary battery **404.** In addition, the power management unit **420** is configured to automatically turn up or down the illumination intensity of the display system in response to detected ambient light conditions. It is desirable to avoid keeping the illumination low when the vehicle enters a neighborhood of low lighting condition, and bring up the illumination intensity when the vehicle is in the vicinity of bright areas.

When the engine of the vehicle is started and running, the display unit **456** (e.g., LCD and/or LED display screen) receives power from the engine (i.e., alternator) of the vehicle, and both the primary **402** and the secondary **404** batteries are being charged. The primary battery voltage sampling **422** receives and detects a higher electric voltage (e.g., 13.5 Volts) than a benchmark voltage **424** (e.g., 5.1 Volts) from the primary battery **402.** The secondary battery voltage sampling **426** also receives and detects a higher voltage (e.g., 10 Volts) than the benchmark voltage **428** (5.1 Volts) from the secondary battery **404.** As a result, power with sufficient electric voltage is passed by a controller **423** to a first electric relay **442,** which closes or turns on a first switch **441** in providing power to the display unit **456.** The power with sufficient high voltage is passed by the controller **427** to an AND gate **448.** In addition, the power from the primary battery **402** is also sent through a timer **440** to the AND gate **448.** Then the power is sent to a second electric relay **444,** which closes or turns on a second switch **443** in providing power to the display unit **456.**

Once the vehicle engine is turned off, the primary battery voltage sampling block **422** detects a lower voltage than the benchmark voltage **424,** the low voltage electric power triggers the first relay **442** to open or turn off the first switch **441.** The lower voltage also causes the timer **440** to start its clock for a pre-determined time (e.g., one hour) and the display unit **456** is powered by the secondary battery **404** for the duration of the pre-determined amount of time in the timer **440** before the second relay **444** is triggered to turn off or open the switch **443** to cut off the power to the display unit **456.** The exemplary logic of the power management board **420** is to preserve the primary battery **402** to restart the engine of the vehicle; and to prevent excessive draining of the secondary battery **404** with the timer **440.** The automated electronic logics can be overridden by a manual reset **412,** which may be activated by an operator of the vehicle (e.g., a driver). In one embodiment, the power is turned off as soon as the reset **412** is activated. In another embodiment, when the reset **412** (e.g., a hard or soft button) is activated, an electronic signal (e.g., a pulse) is sent to the computer device of the display unit **456** to initiate a power off operation (e.g., a power off operation performed by an operating system of a computer).

Further included in the power management circuit board **420** are power management logics for back light **458** (e.g., LED back light) of static display in the front and rear end of the display unit **456.** A light sensor **414** (e.g., Cadmium Sulphide (CdS) photocell light sensor) is included to convert ambient lights to electrical signals or pulses. The light sensor voltage sampling **432** detects the voltage out of the light sensor **414** and compares to a benchmark voltage **434.** If a higher than benchmark voltage is detected, a signal is sent from block **433** to a third relay **446.** The third relay **446** turns on and off a third switch **445,** which controls the power to the back light **458.** For example, the back light **458** is turned on automatically in response to a darker ambient light condition (e.g., evening, early morning, foggy day, etc.)

In another embodiment, illumination intensity of the display unit **456** is adjustable in response to the detected ambient light conditions by the light sensor **414.** The power management circuit board **420** may be configured to automatically dim the illumination of the display panels and display plates in a darker environment and brighten in a brighter environment. For example, local city ordnance may only allow a vehicle carrying a display sign in certain brightness level. In another example, a brighter sign is needed in a very bright ambient environment such as downtown or city center area. Changing illumination intensity of the displayed messages may be managed in conjunction with a GPS. For example, when the vehicle travels into a local area that prohibits displaying certain messages, the display unit computer device, basing on the location information determined by the GPS, will automatically change the display illumination to an acceptable level according to the local rules or regulations.

The present invention has been described in sufficient detail with a certain degree of particularity. It is understood to those skilled in the art that the present disclosure of embodiments has been made by way of examples only and that numerous changes in the arrangement and combination of parts may be resorted without departing from the scope of the invention as claimed. While the embodiments discussed herein may appear to include some limitations as to the presentation of the information units, in terms of the format and arrangement, the invention has applicability well beyond such embodiment, which can be appreciated by those skilled in the art. Accordingly, the scope of the present invention is defined by the appended claims rather than the forgoing description of embodiments.

## Claims

1. A display system (100) for showing electronic messages, the display system comprising:
a vehicle having at least a primary battery (402);
a display unit (120), mounted on roof of the vehicle, configured for showing electronic messages that are be illuminated in variable intensity
**characterised in that**
- a power management device (212) is coupled to the primary battery (402), a secondary battery (404) and to the display unit (120), wherein the power management device (212) is configured to determine an appropriate battery to energize the display unit (120) and wherein,
- the primary battery (402) is provided For the vehicle to start, the vehicle is equipped with the secondary battery (404) that is not for the vehicle to start, the power source of the display unit (120) is automatically switched from the primary battery (402) to the secondary battery (404), when the vehicle's engine is turned off.
- wherein the power source of the display unit (120) is automatically switched to the secondary battery (404) as the power source triggers a timer (440), coupled to the power management device (212), to start counting down a pre-determined amount of time.

2. The system of claim 1, wherein the display unit includes at least two display panels(102, 104, 122, 124) positioned with a display side facing outwards and two display plates (106, 108, 126, 128), each of the display plates is enclosed in a chamber with a transparent cover (136).

3. The system of claim 1, further comprises a light sensor (414) coupled to the power management device, wherein the light sensor is configured to detect ambient light condition, the illumination intensity automatically dims or brightens as the ambient light condition becomes darker or brighter, respectively.

4. The system of claim 1, wherein the display unit is encased in an enclosure (136) with aerodynamic shape for reducing wind noises and drags.

5. The system of claim 4, wherein the enclosure is configured with a set of cooling air duct openings(142, 144) for ventilation of the display unit (120).

6. The system of claim 5, wherein the enclosure further includes a plurality of air filters for filtering out dust of cooling airs and a plurality of water diverters for diverting water gotten through the air duct openings, away from the display unit.

7. The system of claim 6, wherein the enclosure further comprises a bottom structure so shaped to fit the vehicle's roof curvature.

8. The system of claim 7, wherein the enclosure further comprises a set of adjustable anchors configured for securing the display unit onto ribs under the roof of the vehicle to substantially evenly distributing weight of the display unit.

9. The system of claim 1, further comprising:
a computer device configured for processing and controlling the electronic messages to be shown in the display unit; and
a Global Position System (GPS) (208) configured to determine a location of the vehicle, wherein the computing device, coupled to the GPS,
communicates wirelessly with a base station to receive at least some of the electronic messages in accordance with the location of the vehicle.

10. The system of claim 9, wherein some of the location-based messages are time sensitive and have to be displayed at a certain time in a specified location.

11. The system of claim 1, wherein the display unit includes at least two display panels positioned with a display side facing outwards.

12. The system of claim 11, wherein each of the display panels includes a plurality of groups of Light Emitting Diodes (LEDs), each group including a red LED, a green LED and a blue LED.

13. The system of claim 12, wherein each of the display panels comprises a Liquid Crystal Display (LCD) screen or a plasma display (456).

14. The system of claim 13, wherein the display plate is mounted facing in an orientation substantially perpendicular to the two display panels.

## Patentansprüche

1. Displaysystem (100) zum Anzeigen elektronischer Nachrichten, wobei das Displaysystem Folgendes umfasst:
ein Fahrzeug mit wenigstens einer primären Batterie (402);
eine Displayeinheit (120), die auf dem Dach des Fahrzeugs montiert und so konfiguriert ist, dass sie elektronische Nachrichten anzeigt, die mit veränderlicher Intensität beleuchtet werden können,
**dadurch gekennzeichnet, dass**
- eine Strommanagementvorrichtung (212) mit der primären Batterie (402), einer sekundären Batterie (404) und der Displayeinheit (120) gekoppelt ist, wobei die Strommanagementvorrichtung (212) so konfiguriert ist, dass sie eine geeignete Batterie ermittelt, um die Displayeinheit (120) zu bestromen und wobei
- die primäre Batterie (402) zum Starten des Fahrzeugs vorgesehen ist, das Fahrzeug mit der sekundären Batterie (404) ausgestattet ist, die nicht zum Starten des Fahrzeugs vorgesehen ist, die Stromquelle der Displayeinheit (120) automatisch von der primären Batterie (402) auf die sekundäre Batterie (404) umgeschaltet wird, wenn der Motor des Fahrzeugs abgeschaltet wird,
- wobei die Stromquelle der Displayeinheit (120) automatisch auf die sekundäre Batterie (404) umgeschaltet wird, wenn die Stromquelle eine Zeituhr (440) auslöst, die mit der Strommanagementvorrichtung (212) gekoppelt ist, um mit dem Herunterzählen einer vorbestimmten Zeitdauer zu beginnen.

2. System nach Anspruch 1, wobei die Displayeinheit wenigstens zwei mit der Anzeigeseite nach außen positionierte Displaytafeln (102, 104, 122, 124) und zwei Displayplatten (106, 108, 126, 128) aufweist, wobei jede der Displayplatten in einer Kammer mit einem transparenten Deckel (136) eingeschlossen ist.

3. System nach Anspruch 1, das ferner einen Lichtsensor (414) umfasst, der mit der Strommanagementvorrichtung gekoppelt ist, wobei der Lichtsensor zum Erkennen einer Umgebungslichtbedingung gekoppelt ist, wobei die Beleuchtungsintensität automatisch zu- oder abnimmt, wenn die Umgebungslichtbedingung heller bzw. dunkler wird.

4. System nach Anspruch 1, wobei die Anzeigeeinheit in einem Gehäuse (136) mit aerodynamischer Form zum Reduzieren von Windgeräuschen und -widerstand eingeschlossen ist.

5. System nach Anspruch 4, wobei das Gehäuse mit einem Satz Kühlluftkanalöffnungen (142, 144) zur Belüftung der Displayeinheit (120) konfiguriert ist.

6. System nach Anspruch 5, wobei das Gehäuse ferner mehrere Luftfilter zum Ausfiltern von Kühlluftstaub und mehrere Wasserableiter zum Ableiten weg von der Displayeinheit von Wasser, das durch die Luftkanalöffnungen eingedrungen ist, aufweist.

7. System nach Anspruch 6, wobei das Gehäuse ferner eine Bodcnstruktur aufweist, die so gestaltet ist, dass sie in die Wölbung des Fahrzeugdachs passt.

8. System nach Anspruch 7, wobei das Gehäuse ferner einen Satz einstellbare Verankerungen umfasst, die zum Befestigen der Displayeinheit auf Rippen unter dem Dach des Fahrzeugs konfiguriert sind, um das Gewicht der Displayeinheit im Wesentlichen gleichmäßig zu verteilen.

9. System nach Anspruch 1, das ferner Folgendes umfasst:
ein Computergerät, das zum Verarbeiten und Steuern der elektronischen Nachrichten konfiguriert ist, die auf der Displayeinheit gezeigt werden sollen; und
ein globales Positionierungssystem (GPS)(208), das zum Ermitteln eines Ortes des Fahrzeugs konfiguriert ist, wobei das mit dem GPS gekoppelte Computergerät drahtlos mit einer Basisstation kommuniziert, um dem Ort des Fahrzeugs entsprechend wenigstens einige der elektronischen Nachrichten zu empfangen.

10. System nach Anspruch 9, wobei einige der ortsbasierten Nachrichten zeitabhängig sind und zu einer bestimmten Zeit an einem vorgegebenen Ort angezeigt werden müssen.

11. System nach Anspruch 1, wobei die Displayeinheit wenigstens zwei mit einer Anzeigeseite nach außen positionierte Displaytafeln beinhaltet.

12. System nach Anspruch 11, wobei jede der Displaytafeln mehrere Gruppen von Leuchtdioden (LEDs) beinhaltet, wobei jede Gruppe eine rote LED, eine grüne LED und eine blaue LED aufweist.

13. System nach Anspruch 12, wobei jede der Displaytafeln einen Flüssigkristallanzeige-(LCD)-Schirm oder ein Plasmadisplay (456) umfasst.

14. System nach Anspruch 13, wobei die Displayplatte in eine Orientierung im Wesentlichen lotrecht zu den beiden Displaytafeln zeigend montiert ist.

## Revendications

1. Système d'affichage (100) pour présenter des messages électroniques, le système d'affichage comprenant :
un véhicule possédant au moins une batterie primaire (402) ;
une unité d'affichage (120), montée sur le toit du véhicule, qui est configurée pour présenter des messages électroniques qui sont destinés à être illuminés suivant une intensité variable,
**caractérisé en ce que**
- un dispositif de gestion d'énergie (212) est couplé à la batterie primaire (402), à une batterie secondaire (404) et à l'unité d'affichage (120), cas dans lequel le dispositif de gestion d'énergie (212) est configuré de façon à déterminer une batterie appropriée pour activer l'unité d'affichage (120) et cas dans lequel
- la batterie primaire (402) est prévue pour permettre au véhicule de démarrer, le véhicule étant équipé de la batterie secondaire (404) qui n'est pas destinée au démarrage du véhicule, la source d'énergie de l'unité d'affichage (120) étant automatiquement permutée de la batterie primaire (402) à la batterie secondaire (404) au moment où le moteur du véhicule est coupé,
- la source d'énergie de l'unité d'affichage (120) est automatiquement permutée sur la batterie secondaire (404), dès que la source d'énergie déclenche une minuterie (440), laquelle est couplée au dispositif de gestion d'énergie (212), afin de commencer le compte à rebours d'un intervalle de temps prédéterminé.

2. Système selon la revendication 1, l'unité d'affichage comportant au moins deux panneaux d'affichage (102, 104, 122, 124) lesquels sont positionnés de façon à ce qu'un côté Affichage soit dirigé vers l'extérieur, et deux plaques d'affichage (106, 108, 126, 128), chacune des plaques d'affichage étant abritée dans une chambre munie d'un capot transparent (136).

3. Système selon la revendication 1, comprenant en outre un capteur de lumière (414) qui est couplé au dispositif de gestion d'énergie, cas dans lequel le capteur de lumière est configuré de façon à détecter des conditions de luminosité ambiante, l'intensité de l'illumination subissant automatiquement une diminution ou une augmentation au fur et à mesure que les conditions de luminosité ambiante deviennent plus claires ou plus sombres, respectivement.

4. Système selon la revendication 1, l'unité d'affichage étant encastrée dans une enceinte (136) ayant une forme aérodynamique afin de réduire les bruits du vent et les effets de traînée.

5. Système selon la revendication 4, l'enceinte étant configurée de façon à comporter une série d'ouvertures de gaines d'air de refroidissement (142, 144) pour assurer la ventilation de l'unité d'affichage (120).

6. Système selon la revendication 5, l'enceinte comportant en outre une pluralité de filtres à air pour éliminer par filtrage la poussière dans l'air de refroidissement et une pluralité de déflecteurs d'eau pour faire dévier l'eau ayant pénétré par les ouvertures de gaine d'air, et pour l'éloigner ainsi de l'unité d'affichage.

7. Système selon la revendication 6, l'enceinte comprenant en outre une structure inférieure qui est façonnée de sorte à s'adapter à la courbure du toit du véhicule.

8. Système selon la revendication 7, l'enceinte comprenant en outre un ensemble d'éléments d'ancrage réglables lesquels sont configurés de façon à assujettir l'unité d'affichage sur des nervures ménagées sous le toit du véhicule afin d'assurer une distribution sensiblement égale du poids de l'unité d'affichage.

9. Système selon la revendication 1, comprenant en outre :
un dispositif informatique qui est configuré de façon à traiter et à gérer les messages électroniques destinés à être présentés sur l'unité d'affichage ; et
un GPS (système de positionnement à capacité globale) (208) qui est configuré de façon à déterminer une localisation du véhicule, cas dans lequel le dispositif informatique, couplé au GPS, assure une communication sans fil avec une station de base afin de recevoir au moins certains des messages électroniques lesquels concordent avec la localisation du véhicule.

10. Système selon la revendication 9, certains des messages tributaires de la localisation étant sensibles à l'heure et devant être présentés à une certaine heure dans un endroit spécifique.

11. Système selon la revendication 1, l'unité d'affichage englobant au moins deux panneaux d'affichage lesquels sont positionnés de façon à ce qu'un côté Affichage soit dirigé vers l'extérieur.

12. Système selon la revendication 11, chacun des panneaux d'affichage comportant une pluralité de groupes de diodes électroluminescentes (DEL), chaque groupe possédant une DEL rouge, une DEL verte et une DEL bleue.

13. Système selon la revendication 12, chacun des panneaux d'affichage comprenant un écran à cristaux liquides (LCD) ou un affichage plasma (456).

14. Système selon la revendication 13, la plaque d'affichage étant montée de façon à être dirigée suivant une orientation sensiblement perpendiculaire aux deux panneaux d'affichage.
